# EUROPÄISCHE PATENTSCHRIFT

(11) **EP 2 595 520 B1**
(45) Veröffentlichungstag und Bekanntmachung des Hinweises auf die Patenterteilung: **19.11.2014**
(21) Anmeldenummer: 11728637.7
(22) Anmeldetag: 30.06.2011
(51) Int. Cl.: A47L 9/00, A47L 5/36, A47L 9/32

(54) **SAUGREINIGUNGSVORRICHTUNG**
SUCTION CLEANING DEVICE
DISPOSITIF DE NETTOYAGE PAR ASPIRATION

(30) Priorität: 22.07.2010 DE 102010038303
(43) Veröffentlichungstag der Anmeldung: 29.05.2013
(73) Patentinhaber: Alfred Kärcher GmbH & Co. KG, 71364 Winnenden (DE)
(72) Erfinder: PEFLOF, Gábor, 71364 Winnenden (DE); JEUTTER, Roland, 73663 Berglen (DE); RICHTER, Wolfgang, 71364 Winnenden (DE)
(74) Vertreter: Hoeger, Stellrecht & Partner Patentanwälte
(86) Internationale Anmeldenummer: PCT/EP2011/061048
(87) Internationale Veröffentlichungsnummer: WO 2012/010393

(56) Entgegenhaltungen:
- CH-A5- 688 734
- DE-A1-102008 028 645

## Beschreibung

Die Erfindung betrifft eine Saugreinigungsvorrichtung mit den Merkmalen des Oberbegriffes von Patentanspruch 1.

Es sind Saugreinigungsvorrichtungen bekannt mit einem entlang einer Bodenfläche verfahrbaren Gestell und einem Sauggerät, das ein am Gestell gehaltenes Geräteoberteil aufweist sowie einen unterhalb des Geräteoberteils angeordneten Schmutzsammelbehälter. Das Gestell weist mindestens eine Hubeinrichtung und ein um eine horizontale Schwenkachse verschwenkbares Betätigungselement auf zum Anheben und Absenken des Schmutzsammelbehälters, der in seiner angehobenen Stellung am Geräteoberteil strömungsdicht anliegt und der in seiner abgesenkten Stellung einen Abstand zum Geräteoberteil einnimmt und auf der Bodenfläche aufsitzt.

Derartige Saugreinigungsvorrichtungen werden häufig auch als Industriestaubsauger bezeichnet. Sie kommen insbesondere zur Absaugung von Stäuben an Maschinen und Geräten zum Einsatz. Sie weisen ein Gestell auf, das Laufräder aufweist und an einer Bodenfläche entlang verfahren werden kann. Am Gestell ist das Sauggerät gehalten, das ein Geräteoberteil aufweist sowie einen unterhalb des Geräteoberteils angeordneten Schmutzsammelbehälter. Das Geräteoberteil umfasst ein Saugaggregat, mit dem der Schmutzsammelbehälter mit Unterdruck beaufschlagt werden kann. Dies gibt die Möglichkeit, Sauggut, also insbesondere Stäube, in den Schmutzsammelbehälter einzusaugen. Während des normalen Betriebes der Saugreinigungsvorrichtung liegt der Schmutzsammelbehälter strömungsdicht am Geräteoberteil an. Zum Entleeren kann der Schmutzsammelbehälter aus seiner angehobenen Stellung, in der er am Geräteoberteil strömungsdicht anliegt, in eine abgesenkte Stellung überführt werden, in der er einen Abstand zum Geräteoberteil einnimmt und auf der Bodenfläche aufsitzt. Er kann dann dem Gestell entnommen und entleert werden. Hierbei kann vorgesehen sein, dass am Schmutzsammelbehälter Laufräder angeordnet sind, mit denen der abgesenkte Schmutzsammelbehälter entlang der Bodenfläche verfahren werden kann.

Zum Anheben und Absenken des Schmutzsammelbehälters kommt mindestens eine Hubeinrichtung zum Einsatz, die am Gestell der Saugreinigungsvorrichtung angeordnet ist. Der Hubeinrichtung ist ein Betätigungselement zugeordnet, das um eine horizontale Schwenkachse verschwenkbar ist. Durch Verschwenken des Betätigungselementes kann der Schmutzsammelbehälter mittels der Hubeinrichtung angehoben und abgesenkt werden.

Eine Saugreinigungsvorrichtung mit den Merkmalen des Oberbegriffes von Patentanspruch 1 ist aus dem Dokument CH 688 734 A5 bekannt. Dieses Dokument offenbart eine Saugreinigungsvorrichtung mit einem entlang einer Bodenfläche verfahrbaren Gestell und einem Sauggerät. Ein Geräteoberteil des Sauggeräts ist am Gestell gehalten und ein Schmutzsammelbehälter des Sauggeräts ist unterhalb des Geräteoberteils angeordnet. Das Gestell weist eine Hubeinrichtung auf mit einem Schubbügel, der ein um eine horizontale Schwenkachse verschwenkbares Betätigungselement ausbildet und mit dessen Hilfe der Schmutzsammelbehälter angehoben und abgesenkt werden kann. In seiner angehobenen Stellung liegt der Schmutzsammelbehälter strömungsdicht am Geräteoberteil an und in seiner abgesenkten Stellung nimmt der Schmutzsammelbehälter einen Abstand zum Geräteoberteil ein und sitzt auf der Bodenfläche auf. Der Schubbügel kann vom Benutzer zum Verfahren der Saugreinigungsvorrichtung in stehender Haltung ergriffen werden und zum Absenken des Schmutzsammelbehälters ist der Schubbügel um etwa 135° um die Schwenkachse nach oben verschwenkbar. In der angehobenen Stellung kann der Schubbügel mit Hilfe eines Arretierungselements arretiert werden. Das Arretierungselement ist zwischen einer Arretierungsstellung, in der der Schubbügel arretiert ist, und einer Freigabestellung, in der der Schubbügel verschwenkbar ist, hin und her bewegbar.

Aufgabe der vorliegenden Erfindung ist es, eine Saugreinigungsvorrichtung der eingangs genannten Art derart weiterzubilden, dass sie eine einfachere Handhabung aufweist.

Diese Aufgabe wird durch eine Saugreinigungsvorrichtung mit den Merkmalen von Patentanspruch 1 gelöst.

Die erfindungsgemäße Saugreinigungsvorrichtung zeichnet sich durch eine einfache Handhabung aus. Das zum Anheben und Absenken des Schmutzsammelbehälters zum Einsatz kommende Betätigungselement ist in Form eines Schubbügels ausgestaltet, mit dem die Saugreinigungsvorrichtung entlang der Bodenfläche zu einem gewünschten Einsatzort verfahren werden kann. Der Benutzer kann den Schubbügel in ergonomisch günstiger Weise stehend ergreifen und über den Schubbügel eine Schub- oder Zugkraft auf die Saugreinigungsvorrichtung, insbesondere auf das Gestell ausüben.

Soll der Schmutzsammelbehälter entleert werden, so kann der Benutzer den Schubbügel um die Schwenkachse nach oben verschwenken, wobei er seine zum Ergreifen des Schubbügels eingenommene Position seitlich neben der Saugreinigungsvorrichtung beim Verschwenken des Schubbügels beibehalten kann, da der Schubbügel maximal um 135° nach oben verschwenkt werden muss, um den Schmutzsammelbehälter auf die Bodenfläche abzusenken. Anschließend kann der Benutzer dann den Schmutzsammelbehälter entsorgen.

Der Schubbügel ist in der angehobenen Stellung des Schmutzsammelbehälters arretierbar. Eine unbeabsichtigte Bewegung des Schubbügels und damit auch des Schmutzsammelbehälters kann dadurch zuverlässig verhindert werden.

Die Saugreinigungsvorrichtung weist mindestens ein Arretierungselement auf, das zwischen einer Arretierungsstellung, in der der Schubbügel arretiert ist, und einer Freigabestellung, in der der Schubbügel verschwenkbar ist, hin und her bewegbar ist. Das Arretierungselement kann vom Benutzer hin und her bewegt werden oder es kann auch mit einem Kraftspeicher zusammenwirken, der das Arretierungselement bewegt. Als Kraftspeicher kann beispielsweise ein Federelement vorgesehen sein.

Gemäß der Erfindung ist das mindestens eine Arretierungselement beim Anheben des Schmutzsammelbehälters durch Verschwenken des Schubbügels selbsttätig in seine Arretierungsstellung bewegbar. Dies hat eine weitere Vereinfachung der Handhabung der Saugreinigungsvorrichtung zur Folge. Soll der Schmutzsammelbehälter abgesenkt werden, so kann der Benutzer das mindestens eine Arretierungselement aus seiner Arretierungsstellung in seine Freigabestellung bewegen, so dass anschließend der Schubbügel um seine Schwenkachse nach oben verschwenkt werden kann. Der Schmutzsammelbehälter kann dann wie voran stehend erläutert entleert werden, und anschließend kann er durch Verschwenken des Schubbügels wieder angehoben werden. Beim Anheben des Schmutzsammelbehälters geht das mindestens eine Arretierungselement selbsttätig in seine Arretierungsstellung über. Es ist also für den Benutzer nicht erforderlich, nach dem Anheben des Schmutzsammelbehälters den Schubbügel manuell zu arretieren, indem er das mindestens eine Arretierungselement in seine Arretierungsstellung bewegt, sondern beim Anheben des Schmutzsammelbehälters geht das mindestens eine Arretierungselement selbsttätig in seine Arretierungsstellung über.

Günstig ist es, wenn der Schubbügel in der angehobenen Stellung des Schmutzsammelbehälters maximal 30° zur Horizontalen geneigt ist, insbesondere ein Neigungswinkel von maximal 20°, zum Beispiel maximal 10° zur Horizontalen hat sich als sehr vorteilhaft erwiesen.

Der Schubbügel weist ein vom Benutzer ergreifbares Griffteil auf. In der angehobenen Stellung des Schmutzsammelbehälters ist das Grifftteil bevorzugt in einem Abstand zur Bodenfläche von 80 cm bis 100 cm, insbesondere 90 cm positionierbar. Der Benutzer kann dadurch das Griffteil in stehender Haltung bequem ergreifen.

Günstigerweise ist der Schubbügel in der abgesenkten Stellung des Schmutzsammelbehälters maximal 30° zur Vertikalen geneigt. Insbesondere ein Neigungswinkel bezogen auf die Vertikale von maximal 20°, beispielsweise maximal 10° ist von Vorteil, da dies die Handhabung der Saugreinigungsvorrichtung beim Absenken des Schmutzsammelbehälters zusätzlich erleichtert.

Es kann vorgesehen sein, dass der Schmutzsammelbehälter durch Verschwenken des Schubbügels um maximal 90° anhebbar und absenkbar ist. Eine derartige Schwenkbewegung kann vom Benutzer auf besonders einfache Weise vorgenommen werden, ohne dass er hierbei seine Stellung relativ zur Saugreinigungsvorrichtung verändern muss.

Insbesondere kann vorgesehen sein, dass der Schubbügel in der angehobenen Stellung des Schmutzsammelbehälters im Wesentlichen horizontal und in der absenkten Stellung des Schmutzsammelbehälters im Wesentlichen vertikal ausgerichtet ist.

Günstig ist es, wenn ein Griffteil des Schubbügels in der abgesenkten Stellung des Schmutzsammelbehälters oberhalb des Gehäuseoberteiles positioniert ist.

Bei einer bevorzugten Ausgestaltung der erfindungsgemäßen Saugreinigungsvorrichtung weist das Gestell zwei Stützsäulen auf, zwischen denen das Sauggerät angeordnet ist und an denen jeweils ein mit dem Schubbügel gekoppeltes Tragteil höhenverstellbar gehalten ist. Mittels der beiden Tragteile kann der Schmutzsammelbehälter angehoben und abgesenkt werden. Es kann beispielsweise vorgesehen sein, dass die Tragteile jeweils einen seitlichen Haltearm des Schmutzsammelbehälters untergreifen. Die Tragteile sind jeweils an einer Stützsäule des Gestells höhenverstellbar gelagert und sie sind mit dem Schubbügel gekoppelt, so dass durch eine Schwenkbewegung des Schubbügels die Tragteile in ihrer Lage relativ zur Bodenfläche verstellt werden können.

Günstig ist es, wenn die Tragteile jeweils in einer Führung einer Stützsäule verschiebbar gelagert sind. Die Führung kann beispielsweise in Form einer Nut oder auch in Form eines Langloches ausgestaltet sein.

Von besonderem Vorteil ist es, wenn die Tragteile in vertikaler Richtung verstellbar an einer Stützsäule gehalten sind.

Die Kopplung der Tragteile mit dem Schubbügel erfolgt günstigerweise über einen Kniehebel. Der Einsatz eines Kniehebels hat den Vorteil, dass er auf konstruktiv einfache Weise eine Festlegung des Schubbügels in der angehobenen und der abgesenkten Stellung des Schmutzsammelbehälters ermöglicht. Der Kniehebel kann hierzu zwei gelenkig miteinander verbundene Hebelarme aufweisen, die beim Anheben des Schmutzsammelbehälters ausgehend von einer ersten gebeugten Stellung, in der sie in einem Winkel zueinander ausgerichtet sind, über eine gestreckte Stellung, in der sie fluchtend zueinander ausgerichtet sind, in eine zweite gebeugte Stellung übergehen, in der sie wiederum im Winkel zueinander ausgerichtet sind. Die gestreckte Stellung der beiden Hebelarme bildet einen Totpunkt des Kniehebels. Beim Anheben und beim Absenken des Schmutzsammelbehälters wird dieser Totpunkt jeweils überschritten, so dass der über den Kniehebel mit den Tragteilen verbundene Schubbügel seine Stellung jeweils selbsttätig beibehält.

Der Einsatz eines Kniehebels hat darüber hinaus den Vorteil, dass das beim Anheben und Absenken vom Schmutzsammelbehälter über den Kniehebel auf den Schubbügel ausgeübte Drehmoment variiert werden kann. Hierzu kann die Schwenkachse des Schubbügels günstigerweise in dem Gelenk angeordnet sein, über das die beiden Hebelarme des Kniehebels miteinander verbunden sind. Dies gibt die Möglichkeit, die Lage der Schwenkachse beim Verschwenken des Schubbügels zu verändern. Dies wiederum hat den Vorteil, dass dadurch das vom Schmutzsammelbehälter auf den Schubbügel ausgeübte Drehmoment beim Verschwenken des Schubbügels verändert werden kann. Der Schmutzsammelbehälter weist vor allem im gefüllten Zustand eine beträchtliche Gewichtskraft auf, die beim Absenken des Schmutzsammelbehälters ein auf den Schubbügel einwirkendes Drehmoment zur Folge hat. Aufgrund der Möglichkeit, die Lage der Schwenkachse beim Verschwenken des Schubbügels zu verändern, kann die Schwenkachse beim Absenken des Schmutzsammelbehälters zunächst derart ausgerichtet werden, dass auf die Schwenkachse nur ein sehr geringes Drehmoment einwirkt. Dies kann dadurch erzielt werden, dass die Schwenkachse nur einen geringen Abstand zu der durch den Schwerpunkt des Schmutzsammelbehälters verlaufenden Vertikalen einnimmt. Dies hat zur Folge, dass der Benutzer mit verhältnismäßig geringer Kraftanstrengung den Schubbügel halten und dann nach oben verschwenken kann.

Es kann vorgesehen sein, dass die Kniehebel jeweils einen ersten, an der Stützsäule schwenkbar gelagerten Hebelarm aufweisen, der über ein Gelenk mit einem zweiten, gelenkig über eine Zugstange mit einem Tragteil gekoppelten Hebelarm verbunden ist.

Günstig ist es, wenn der zweite Hebelarm starr mit dem Schubbügel verbunden ist.

Insbesondere kann vorgesehen sein, dass der Schubbügel C- oder U-förmig ausgestaltet ist und zwei Endabschnitte aufweist, die über einen ein Griffteil ausbildenden Verbindungsabschnitt miteinander verbunden sind, wobei sich an die Endabschnitte jeweils ein zweiter Hebelarm eines Kniehebels anschließt.

Von Vorteil ist es, wenn die zweiten Hebelarme jeweils schräg oder senkrecht zu einem Endabschnitt des Schubbügels ausgerichtet sind. Insbesondere eine Ausrichtung im Wesentlichen senkrecht zu den Endabschnitten des Schubbügels ist vorteilhaft.

Bei einer konstruktiv besonders einfachen Ausgestaltung, die sich durch eine hohe mechanische Belastbarkeit auszeichnet, sind die zweiten Hebelarme der Kniehebel einstückig mit dem Schubbügel verbunden.

Der Schubbügel kann beispielsweise in Form eines C- oder U-förmigen Metall- oder Kunststoffrohres ausgestaltet sein, dessen Endabschnitte jeweils über einen Krümmungsabschnitt in einen zweiten Hebelarm eines Kniehebels übergehen.

Von Vorteil ist es, wenn der Schubbügel in der abgesenkten Stellung des Schmutzsammelbehälters mit einer Haltekraft beaufschlagbar ist. In der abgesenkten Stellung des Schmutzsammelbehälters ist der Schubbügel bei der erfindungsgemäßen Saugreinigungsvorrichtung bevorzugt im Wesentlichen vertikal nach oben ausgerichtet oder er nimmt eine vorzugsweise nicht mehr als 30° zur Vertikalen geneigte Stellung ein. Damit der Schubbügel nicht unbeabsichtigt bewegbar ist, ist er günstigerweise mit einer Haltekraft beaufschlagbar. Hierzu kann beispielsweise mindestens ein Federelement zum Einsatz kommen, das den Schubbügel in der abgesenkten Stellung des Schmutzsammelbehälters mit einer Federkraft beaufschlagt. Entgegen der Wirkung der Federkraft kann dann der Schubbügel zum Anheben des Schmutzsammelbehälters um die Schwenkachse nach unten verschwenkt werden. Das Federelement kann beispielsweise als Zugfeder ausgestaltet sein.

Von besonderem Vorteil ist es, wenn das mindestens eine Arretierungselement mit einem Federelement zusammenwirkt, das das Arretierungselement in Abhängigkeit von dessen Ausrichtung relativ zum Federelement wahlweise in der Arretierungsstellung oder in der Freigabestellung hält. Das Federelement hält somit das mindestens eine Arretierungselement wahlweise in dessen Arretierungsstellung oder in dessen Freigabestellung, je nachdem, welche Ausrichtung das Arretierungselement gerade einnimmt. Dies gibt dem Benutzer beispielsweise die Möglichkeit, das Arretierungselement aus seiner Arretierungsstellung manuell in seine Freigabestellung zu verschwenken. Unter der Wirkung des Federelements verbleibt dann das Arretierungselement so lange in seiner Freigabestellung, bis es wieder in seine Arretierungsstellung überführt wird. Das Federelement gewährleistet somit, dass das Arretierungselement nicht unbeabsichtigt eine Zwischenstellung einnimmt.

Eine besonders einfache Handhabung der erfindungsgemäßen Saugreinigungsvorrichtung wird bei einer vorteilhaften Ausführungsform dadurch erzeugt, dass das mindestens eine Arretierungselement zum Absenken des Schmutzsammelbehälters manuell in seine Freigabestellung bewegbar ist und beim Anheben des Schmutzsammelbehälters selbsttätig in seine Arretierungsstellung übergeht.

Bei einer bevorzugten Ausführungsform ist das mindestens eine Arretierungselement am Schubbügel angeordnet. Das Arretierungselement ist dadurch dem Benutzer auf einfache Weise zugänglich.

Um eine unbeabsichtigte Bewegung des Schubbügels zu verhindern, ist es günstig, wenn am Schubbügel zwei bewegliche Arretierungselemente angeordnet sind, die jeweils mit einem starr am Gestell festgelegten Arretierungsglied zusammenwirken. Bei einer derartigen Ausgestaltung muss der Benutzer bewusst zwei Arretierungselemente betätigen, um den Schubbügel um die Schwenkachse nach oben verschwenken zu können. Eine unbeabsichtigte Bewegung des Schubbügels wird dadurch praktisch ausgeschlossen.

Es kann vorgesehen sein, dass das mindestens eine Arretierungselement als am Schubbügel schwenkbar gelagerter Rasthaken ausgestaltet ist, der in der Arretierungsstellung einen am Gestell angeordneten Rastzapfen hintergreift.

Günstigerweise gleitet der Rasthaken beim Verschwenken des Schubbügels in die der angehobenen Stellung des Schmutzsammelbehälters entsprechende Lage am Rastzapfen entlang und geht selbsttätig in seine Arretierungsstellung über. Der Rasthaken kann hierzu eine Gleitfläche aufweisen, die am Rastzapfen zur Anlage gelangt, so dass der Rasthaken beim weiteren Verschwenken des Schubbügels vom Rastzapfen in seine Arretierungsstellung bewegt wird.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung einer erfindungsgemäßen Saugreinigungsvorrichtung mit einem Gestell und einem Sauggerät, wobei ein Schmutzsammelbehälter des Sauggerätes eine angehobene Stellung einnimmt;
- Figur 2:: eine Vorderansicht der Saugreinigungsvorrichtung aus Figur 1, wobei der Schmutzsammelbehälter seine angehobene Stellung einnimmt;
- Figur 3:: eine Seitenansicht der Saugreinigungsvorrichtung aus Figur 1, wobei der Schmutzsammelbehälter seine angehobene Stellung einnimmt und eine Abdeckplatte einer Stützsäule des Gestells entfernt wurde;
- Figur 4:: eine Vorderansicht der Saugreinigungsvorrichtung aus Figur 1, wobei der Schmutzsammelbehälter eine abgesenkte Stellung einnimmt;
- Figur 5:: eine Seitenansicht der Saugreinigungsvorrichtung aus Figur 1, wobei der Schmutzsammelbehälter eine abgesenkte Stellung einnimmt und eine Abdeckplatte einer Stützsäule des Gestells entfernt wurde;
- Figur 6:: eine perspektivische Darstellung der Saugreinigungsvorrichtung aus Figur 1, wobei der Schmutzsammelbehälter seine abgesenkte Stellung einnimmt und zu einem Gehäuseoberteil des Sauggerätes versetzt angeordnet ist;
- Figur 7:: eine Vorderansicht des Gestells der Saugreinigungsvorrichtung aus Figur 1, wobei ein Schubbügel des Gestells eine im Wesentlichen horizontale Stellung einnimmt;
- Figur 8:: eine Schnittansicht längs der Linie 8-8 in Figur 7, wobei der Schubbügel seine im Wesentlichen horizontale Stellung einnimmt und ein am Schubbügel gelagerter Rasthaken seine Raststellung einnimmt;
- Figur 9:: eine Schnittansicht entsprechend Figur 8, wobei der Rasthaken seine Freigabestellung einnimmt;
- Figur 10:: eine Schnittansicht entsprechend Figur 8 beim Übergang des Schubbügels von seiner im Wesentlichen horizontalen Stellung in eine im Wesentlichen vertikale Stellung;
- Figur 11:: eine Schnittansicht entsprechend Figur 8, wobei der Schubbügel seine im Wesentlichen vertikale Stellung einnimmt und
- Figur 12:: eine perspektivische Darstellung eines am Schubbügel schwenkbar gelagerten Rasthakens.

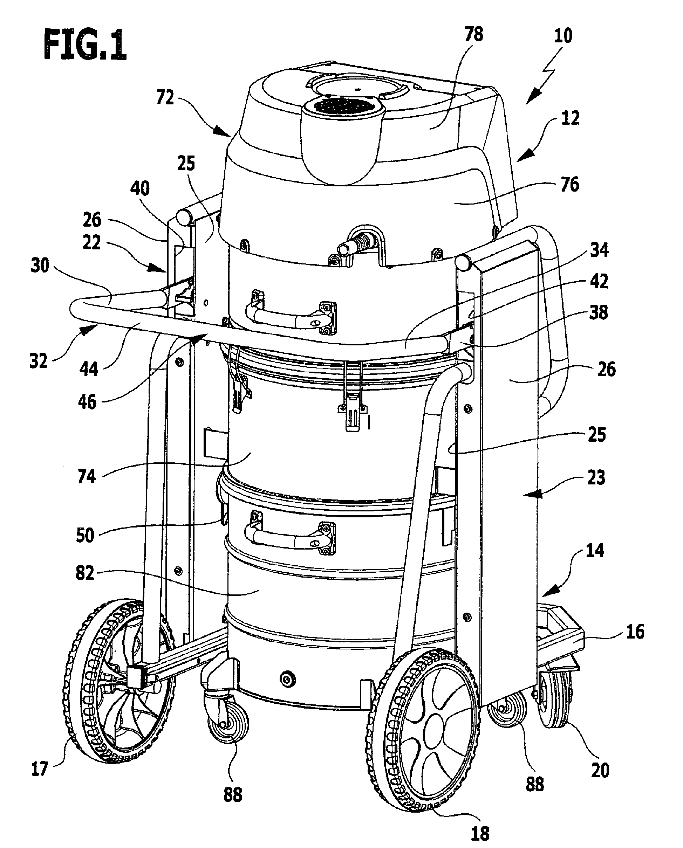

In den Figuren 1 bis 6 ist schematisch eine Saugreinigungsvorrichtung 10 dargestellt mit einem Sauggerät 12, das an einem fahrbaren Gestell 14 gehalten ist. Das Gestell 14 umfasst einen in der Draufsicht im Wesentlichen U-förmigen Rahmen 16, an dem zwei Hinterräder 17, 18 sowie zwei Lenkrollen 19, 20 drehbar gelagert sind, so dass das Gestell 14 entlang einer Bodenfläche verfahren werden kann.

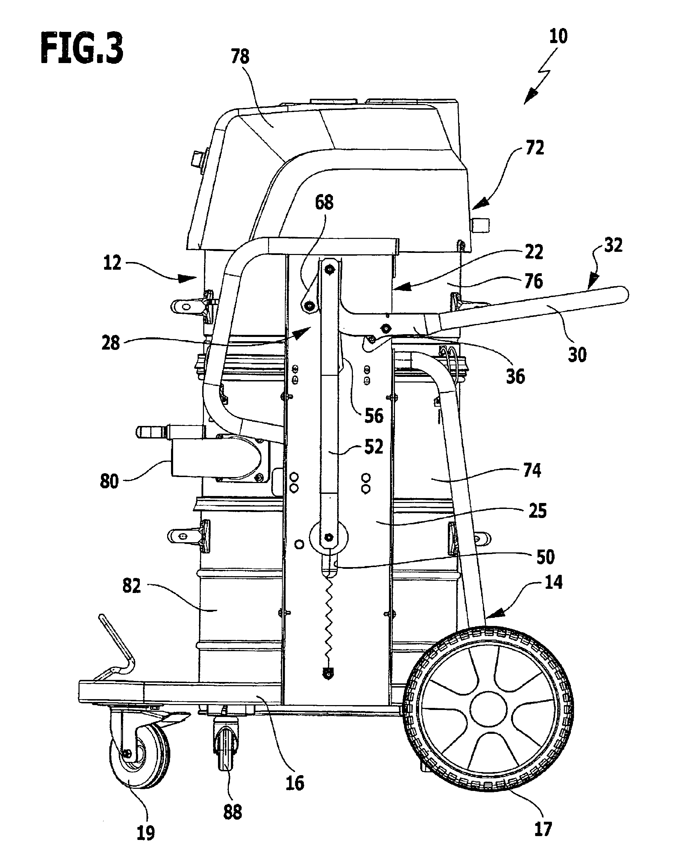

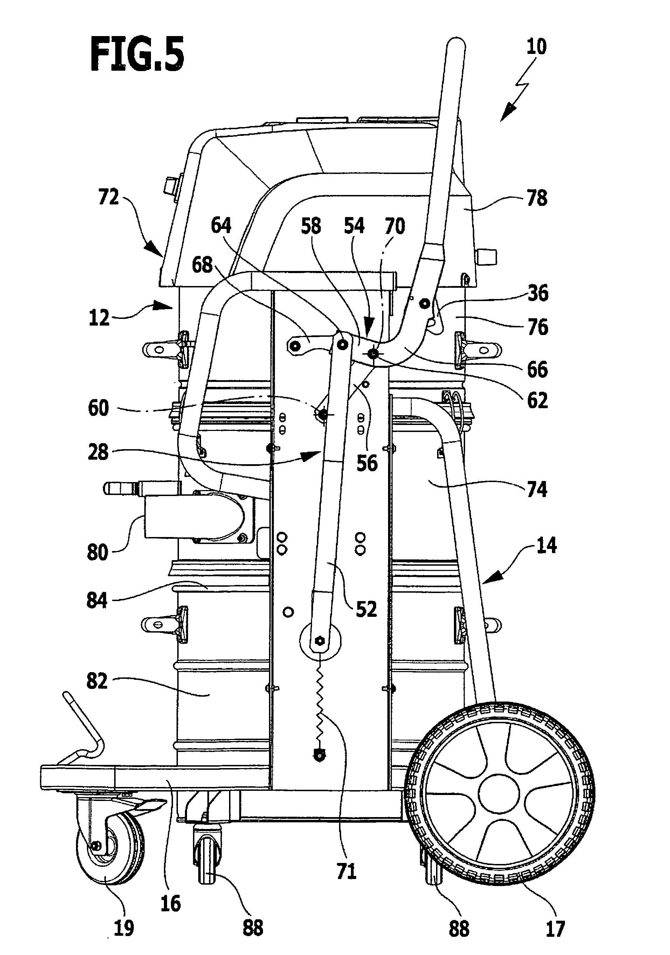

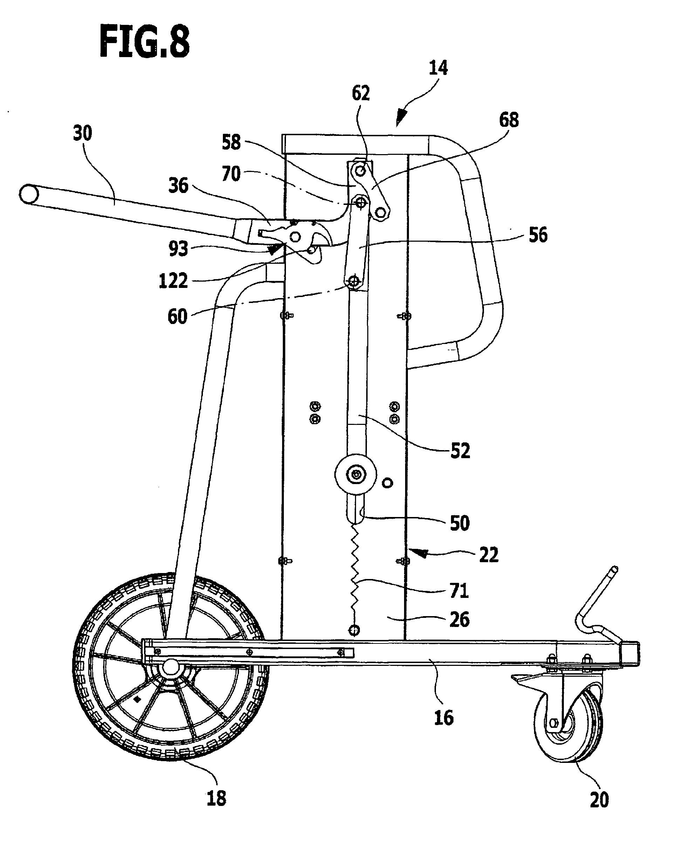

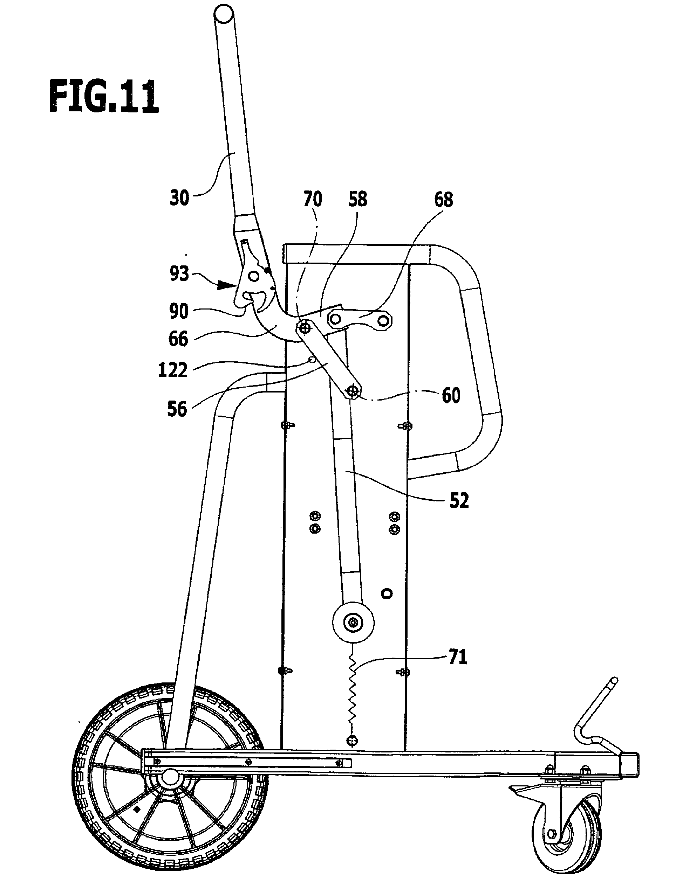

Vom Rahmen 16 ragen eine erste Stützsäule 22 und eine zweite Stützsäule 23 vertikal nach oben. Die beiden Stützsäulen 22, 23 sind identisch ausgestaltet. Auf ihren einander zugewandten Innenseiten weisen die Stützsäulen 22, 23 jeweils eine Stützplatte 25 auf, und auf ihren einander abgewandten Außenseiten umfassen die beiden Stützsäulen 22, 23 jeweils eine Abdeckplatte 26. Das Sauggerät 12 ist zwischen den Stützplatten 25 der beiden Stützsäulen 22, 23 gehalten. Die Abdeckplatte 26 wurde zur Erzielung einer besseren Übersicht in den Figuren 3 und 5 entfernt, und in den Figuren 8 bis 11 wurde eine Stützplatte 25 zur Erzielung einer besseren Übersicht nicht dargestellt.

Die Abdeckplatten 26 sind jeweils im Abstand zu einer Stützplatte 25 angeordnet. Zwischen der Stützplatte 25 und der Abdeckplatte 26 weist jede der beiden Stützsäulen 22, 23 einen Hohlraum auf, in dem eine Hebemechanik 28 angeordnet ist. Die beiden Hebemechaniken sind identisch ausgestaltet. Die in der ersten Stützsäule 22 angeordnete Hebemechanik 28 ist mit einem ersten Schenkel 30 eines U-förmigen Schubbügels 32 gelenkig verbunden, und die Hebemechanik 28 der zweiten Stützsäule 23 ist mit einem zweiten Schenkel 34 des Schubbügels 32 gelenkig verbunden. Hierzu tauchen die Endschnitte 36, 38 des ersten Schenkels 30 und des zweiten Schenkels 34 über seitliche Öffnungen 40, 42 der ersten Stützsäule 22 bzw. der zweiten Stützsäule 23 in den jeweiligen Hohlraum der Stützsäule ein. Die den Stützsäulen 22 bzw. 23 abgewandten Enden der beiden Schenkel 30 und 34 sind über einen Steg 44 des Schubbügels 32 einstückig miteinander verbunden. Der Steg 44 bildet ein Griffteil 46 des Schubbügels 32 aus, an diesem Griffteil 46 kann der Benutzer den Schubbügel 32 in stehender Haltung bequem ergreifen. Dies wird nachfolgend noch näher erläutert.

Die in jeder Stützsäule 22, 23 angeordnete Hebemechanik 28 umfasst ein rollenartiges Tragteil 48, das ein Führungselement in Form eines Langloches 50 der Stützplatte 25 durchgreift und in Richtung des Sauggerätes 12 aus der Stützplatte 25 herausragt. Innerhalb der jeweiligen Stützsäule 22, 23 ist an das Tragteil 48 eine Zugstange 52 angelenkt. Die Zugstange 52 erstreckt sich innerhalb der jeweiligen Stützsäule 22, 23 nach oben und ist mit einem Kniehebel 54 gelenkig verbunden. Der Kniehebel, 54 umfasst einen ersten Hebelarm 56 und einen zweiten Hebelarm 58. Der erste Hebelarm 56 ist an einem ersten Ende um eine horizontale Drehachse 60 drehbar an der Stützplatte 25 gelagert, und das zweite Ende des ersten Hebelarmes 56 ist über ein Kniehebelgelenk 62 mit dem zweiten Hebelarm 58 gelenkig verbunden, der wiederum über ein weiteres Gelenk 64 mit der Zugstange 52 gelenkig verbunden ist.

Wie insbesondere aus Figur 5 deutlich wird, sind die Endabschnitte 36 und 38 des Schubbügels 32 jeweils einstückig mit einem zweiten Hebelarm 58 eines Kniehebels 54 verbunden. Die zweiten Hebelarme 58 sind hierbei ungefähr rechtwinklig zu den jeweiligen Endabschnitten 36 bzw. 38 ausgerichtet und stehen jeweils über einen Krümmungsabschnitt 66 mit einem Endabschnitt 36 bzw. 38 des Schubbügels 32 in Verbindung.

Zusätzlich zum ersten Hebelarm 56 ist an die Stützplatten 25 der beiden Stützsäulen 22, 23 noch ein Ergänzungshebel 68 angelenkt, der über das weitere Gelenk 64 an die Zugstange 52 sowie an den zweiten Hebelarm 58 angelenkt ist. Der Ergänzungshebel 68 verleiht der Hebemechanik 28 eine zusätzliche mechanische Stabilität.

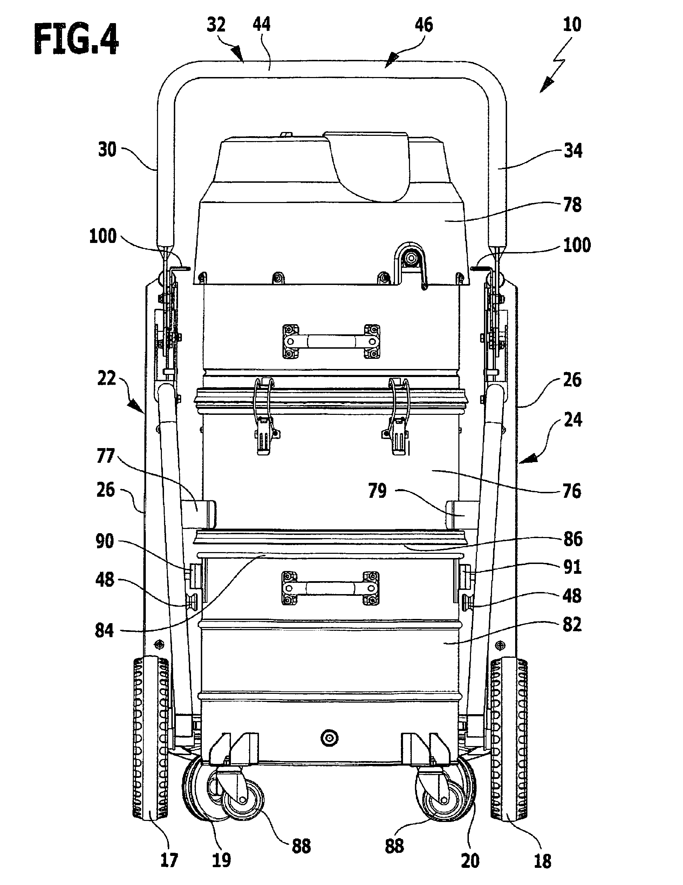

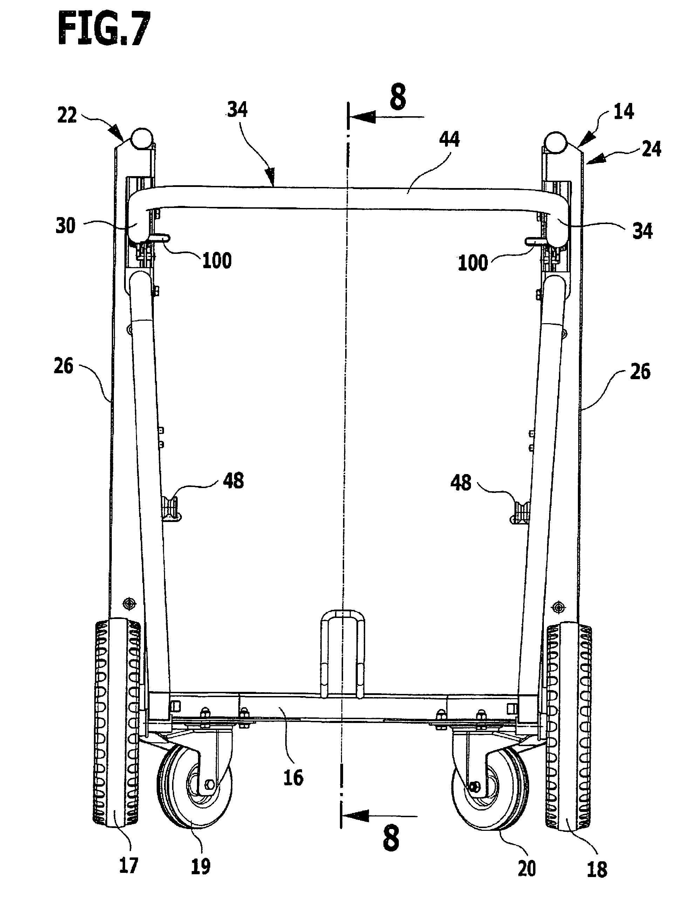

Die beiden Kniehebelgelenke 62 der Hebemechaniken 28 der beiden Stützsäulen 22, 23 definieren eine horizontal ausgerichtete Schwenkachse 70, um die der Schubbügel 32 zwischen seiner in den Figuren 1, 2, 3 und 7, 8, 9 dargestellten Betriebsstellung, in der er im Wesentlichen horizontal ausgerichtet ist, und seiner in den Figuren 4, 5, 6 und 11 dargestellten Wartungsstellung, in der er im Wesentlichen vertikal ausgerichtet ist, hin und her geschwenkt werden kann. Durch die Schwenkbewegung des Schubbügels 32 werden die auf den einander zugewandten Seiten der Stützsäulen 22, 23 aus der jeweiligen Stützplatte 25 herausragenden Tragteile 48 in den jeweiligen Langlöchern 50 vertikal nach oben bzw. nach unten verschoben. Die Definition der Schwenkachse 70 mittels der Kniehebelgelenke 62 ermöglicht es, die Lage der Schwenkachse 70 zu verändern. Die Bewegung der Schwenkachse 70 wird durch die zweiten Hebelarme 58 und die Ergänzungshebel 68 bestimmt und in ihren Endlagen begrenzt.

Um den Schubbügel 32 zuverlässig in seiner im Wesentlichen vertikal nach oben gerichteten Wartungsstellung zu halten, weist die Hebemechanik 28 in jeder Stützsäule 22, 23 eine Zugfeder 71 auf, die einerseits an der Stützplatte 25 und andererseits am freien Ende der Zugstange 52 festgelegt ist. Die Zugfeder 71 übt über die Zugstange 52 und den jeweiligen Kniehebel 54 eine Federkraft auf den Schubbügel 32 aus, die den Schubbügel in seiner Wartungsstellung hält. Ausgehend von der Wartungsstellung kann der Schubbügel entgegen der federelastischen Rückstellkraft der Zugfeder 71 in seine Betriebsstellung verschwenkt werden.

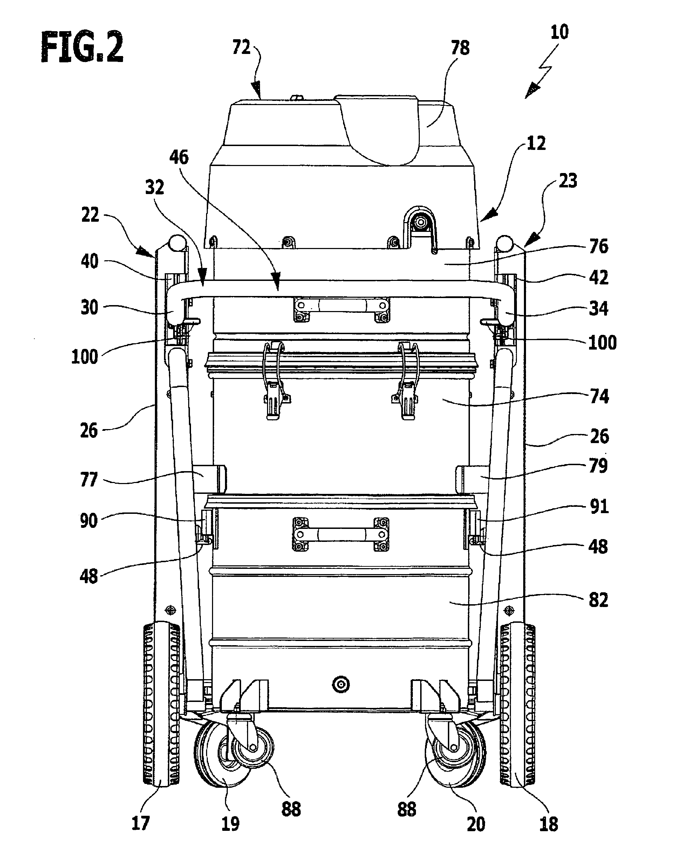

Das Sauggerät 12 umfasst ein Geräteoberteil 72 mit einer Einlasskammer 74, einer Filterkammer 76 und einem Saugkopf 78, die aufeinander gestapelt sind. Die Einlasskammer 74 ist über seitliche Halterungen 77, 79 mit den Stützplatten 25 der Stützsäulen 22, 23 verschraubt. Dies wird insbesondere aus den Figuren 2 und 4 deutlich. In die Einlasskammer 74 mündet ein Saugeinlass 80 und der Saugkopf 78 nimmt in üblicher Weise ein an sich bekanntes und deshalb in der Zeichnung zur Erzielung einer besseren Übersicht nicht dargestelltes Saugaggregat auf, mit dessen Hilfe die Einlasskammer 74 mit Unterdruck beaufschlagt werden kann. Über die Filterkammer 76 steht der Saugkopf 78 mit der Einlasskammer 74 in Strömungsverbindung. In der Filterkammer 76 ist eine an sich bekannte und deshalb in der Zeichnung zur Erzielung einer besseren Übersicht ebenfalls nicht dargestellte Filtereinrichtung angeordnet.

Unterhalb des Geräteoberteils 72 weist das Sauggerät 12 einen Schmutzsammelbehälter 82 auf, der nach Art eines Eimers ausgebildet ist und der mit Hilfe der Tragteile 48 der Hebemechaniken 28 mit seinem freien Rand 84 unter Zwischenlage eines in der Zeichnung nicht dargestellten Dichtringes an den unteren Rand 86 der im Wesentlichen hohlzylindrischen Einlasskammer 74 strömungsdicht angepresst werden kann. Dies wird nachfolgend noch näher erläutert.

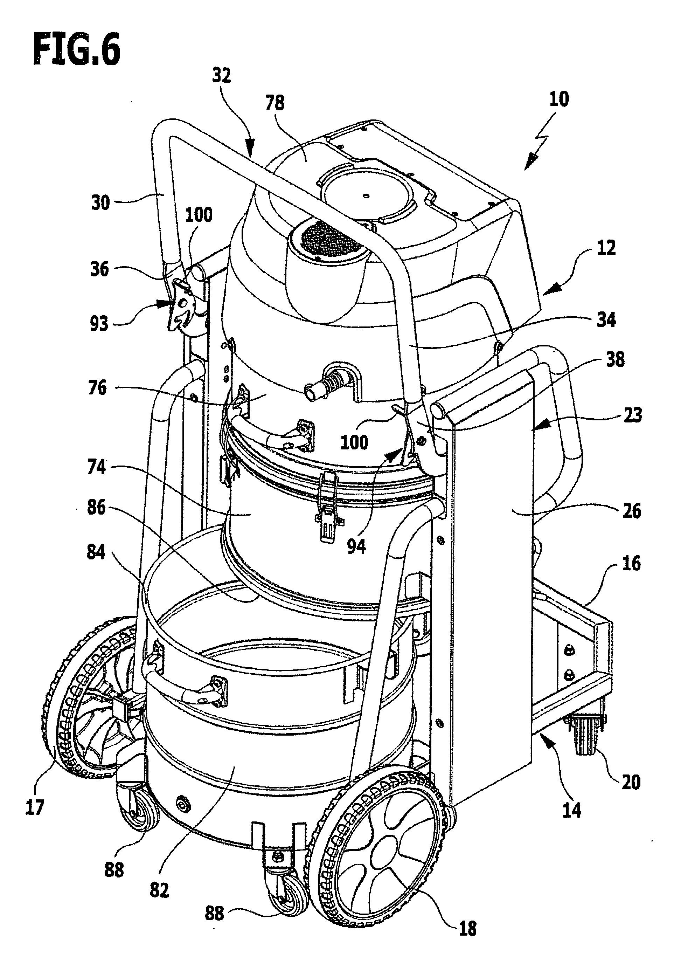

An seiner Unterseite weist der Schmutzsammelbehälter 82 Stützräder 88 auf, mit deren Hilfe der Schmutzsammelbehälter 82, sofern er vom Geräteoberteil 72 gelöst ist, an der Bodenfläche entlang verfahren werden kann. Dies wird insbesondere aus Figur 6 deutlich.

Der Schmutzsammelbehälter 82 weist den einander gegenüberstehenden Tragteilen 48 zugewandt jeweils einen seitlichen Haltearm 90 bzw. 91 auf, der jeweils von einem Tragteil 48 untergriffen werden kann. Dies wird insbesondere aus den Figuren 2 und 4 deutlich. Hierzu muss der Schmutzsammelbehälter 82 unterhalb der Einlasskammer 74 positioniert werden.

Mit Hilfe der Hebemechanik 28 kann der Schmutzsammelbehälter 82 durch Verschwenken des Schubbügels 32 angehoben und abgesenkt werden. In der angehobenen Stellung des Schmutzsammelbehälters 82, wie sie in den Figuren 1 bis 3 dargestellt ist, liegt der freie Rand 84 des Schmutzsammelbehälters 82 strömungsdicht am unteren Rand 86 der Einlasskammer 74 an, so dass mittels des im Saugkopf 78 angeordneten Saugaggregates nicht nur die Einlasskammer 74 sondern auch der Schmutzsammelbehälter 82 mit Unterdruck beaufschlagt werden kann. Dadurch kann Sauggut über den Saugeinlass 80 und die Einlasskammer 74 in den Schmutzsammelbehälter 82 eingesaugt werden.

Zum Entleeren des Schmutzsammelbehälters 82 kann der Schubbügel 32 ausgehend von seiner im Wesentlichen horizontal ausgerichteten Betriebsstellung um die Schwenkachse 70 nach oben verschwenkt werden. Hierzu kann der Benutzer das Griffteil 46 bequem in stehender Haltung ergreifen und in eine Position oberhalb des Geräteoberteils 72 verschwenken, wie dies insbesondere aus Figur 5 deutlich wird. Das Verschwenken des Schubbügels 32 in seine im Wesentlichen vertikal ausgerichtete Wartungsstellung hat zur Folge, dass die Tragteile 48 der beiden Stützsäulen 22, 23 über die jeweiligen Zugstangen 52 und Kniehebel 54 vertikal nach unten verschoben werden. Dadurch wird der Schmutzsammelbehälter 82 so weit abgesenkt, dass er mit seinen Stützrädern 88 auf der Bodenfläche aufsitzt. Er kann anschließend seitlich aus dem U-förmigen Rahmen 16 des Gestells 14 herausgezogen werden, wie dies insbesondere aus Figur 6 deutlich wird. Der Schmutzsammelbehälter 82 kann dann entlang der Bodenfläche zu einer Entleerungsstelle verfahren und entleert werden. Der leere Schmutzsammelbehälter kann dann wieder unterhalb der Einlasskammer 74 positioniert werden, wobei die seitlichen Haltearme 90, 91 des Schmutzsammelbehälters 82 eine Position oberhalb der Tragteile 48 einnehmen. Der Schubbügel 32 kann anschließend vom Benutzer am Griffteil 46 ergriffen und in seine horizontal ausgerichtete Betriebsstellung nach unten verschwenkt werden. Hierbei untergreifen die Tragteile 48 die seitlichen Haltearme 90, 91 und werden über die jeweiligen Zugstangen 54 und Kniehebel 54 so weit vertikal nach oben verschoben, dass der freie Rand 84 des Schmutzsammelbehälters 82 strömungsdicht am unteren Rand 86 der Einlasskammer 54 anliegt. Anschließend kann der normale Saugbetrieb der Saugreinigungsvorrichtung 10 fortgesetzt werden.

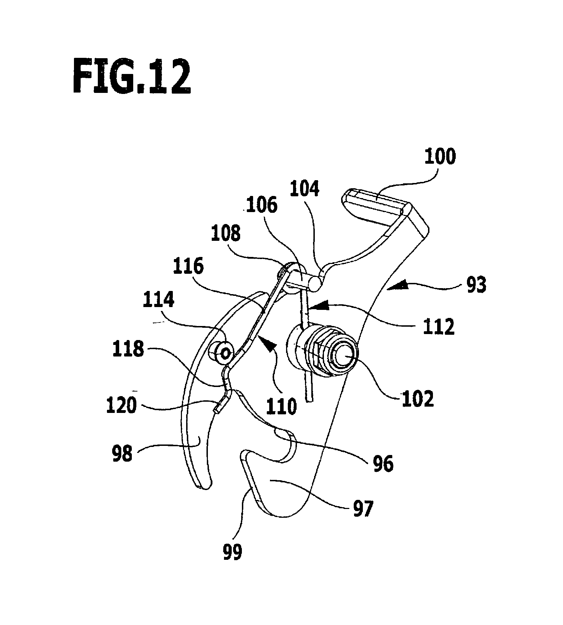

Beim Verschwenken des Schubbügels 32 zwischen seiner Betriebsstellung und seiner Wartungsstellung durchlaufen die Kniehebel 54 der beiden Stützsäulen 22, 23 jeweils eine Totpunktstellung, in der die beiden Hebelarme 56, 58 fluchtend zueinander ausgerichtet sind, wohingegen sie sowohl in der Betriebsstellung als auch in der Wartungsstellung jeweils im Winkel zueinander ausgerichtet sind. Dies stellt sicher, dass der Schubbügel 32 nicht unbeabsichtigt eine Schwenkbewegung ausführt. Eine zusätzliche Sicherung gegen ein unbeabsichtigtes Verschwenken des Schubbügels 32 wird durch den Einsatz zweier identisch ausgebildeter Arretierungseinrichtungen erzielt in Form eines ersten Rasthakens 93 und eines zweiten Rasthakens 94. Der erste Rasthaken 93 ist am ersten Schenkel 30 des Schubbügels 32 schwenkbar gelagert und der zweite Rasthaken 94 ist am zweiten Schenkel 34 des Schubbügels 32 verschwenkbar gelagert. Die beiden Rasthaken 93, 94 sind identisch ausgebildet. Wie insbesondere aus Figur 12 deutlich wird, weisen sie jeweils an einem vorderen Endabschnitt eine ungefähr L-förmige Ausnehmung 96 auf, die einerseits von einem hakenförmigen Endabschnitt 97 und andererseits von einem bogenförmigen Endabschnitt 98 begrenzt wird. Der hakenförmige Endabschnitt 97 weist an seiner Stirnseite eine ebene Gleitfläche 99 auf. An ihren der L-förmigen Ausnehmung 96 abgewandten hinteren Enden weisen die beiden Rasthaken 93, 94 jeweils einen Betätigungsabschnitt 100 auf. Die Betätigungsabschnitte 100 der beiden Rasthaken 93, 94 sind einander zugewandt und im Wesentlichen senkrecht zu den jeweiligen Schenkeln 30 bzw. 34 des Schubbügels 32 ausgerichtet. Dies wird insbesondere aus den Figuren 2 und 4 deutlich.

Die Rasthaken 93, 94 sind jeweils an einem starr mit dem jeweiligen Schenkel 30 bzw. 34 verbundenen Schwenkbolzen 102 schwenkbar gelagert. Im Bereich zwischen dem bogenförmigen Endabschnitt 98 und dem Betätigungsabschnitt 100 weisen die Rasthaken 93, 94 oberhalb des Schwenkbolzens 102 jeweils eine seitliche Ausnehmung 104 auf. In der seitlichen Ausnehmung 104 ist ein starr mit den jeweiligen Schenkeln 30 bzw. 34 verbundener Haltebolzen 106 angeordnet, an dem ein Federelement in Form einer Spreizfeder 108 gehalten ist. Die Spreizfeder 108 weist einen ersten Federschenkel 110 und einen zweiten Federschenkel 112 auf. Der erste Federschenkel 110 ist am Schwenkbolzen 102 festgelegt und der zweite Federschenkel 112 liegt an einem zapfenförmigen Mitnehmer 114 des jeweiligen Rasthakens 93 bzw. 94 an. Der zweite Schenkel 112 umfasst ausgehend vom Haltebolzen 106 einen inneren Schenkelabschnitt 116, der über eine dem Mitnehmer 114 abgewandte, senkrecht zum inneren Schenkelabschnitt 116 ausgerichtete Abwinklung 118 in einen äußeren Schenkelabschnitt 120 übergeht.

Unter der Wirkung der Spreizfeder 108 wird der Rasthaken 93 bzw. 94 um den Schwenkbolzen 102 verschwenkt.

Zur Arretierung des Schubbügels 32 in dessen im Wesentlichen horizontal ausgerichteter Betriebsstellung wirken die Rasthaken 93, 94 jeweils mit einem an der Stützplatte 25 der jeweiligen Stützsäule 22, 23 festgelegten Rastbolzen 122 zusammen, der in der Betriebsstellung des Schubbügels 32 vom hakenförmigen Endabschnitt 97 der Rasthaken 93, 94 umgriffen werden kann. Dies wird insbesondere aus Figur 8 deutlich. In dieser Stellung liegt der äußere Schenkelabschnitt 120 des zweiten Federschenkels 112 am Mitnehmer 114 an, so dass die Spreizfeder 108 den hakenförmigen Endabschnitt 97 gegen den Rastbolzen 122 drückt.

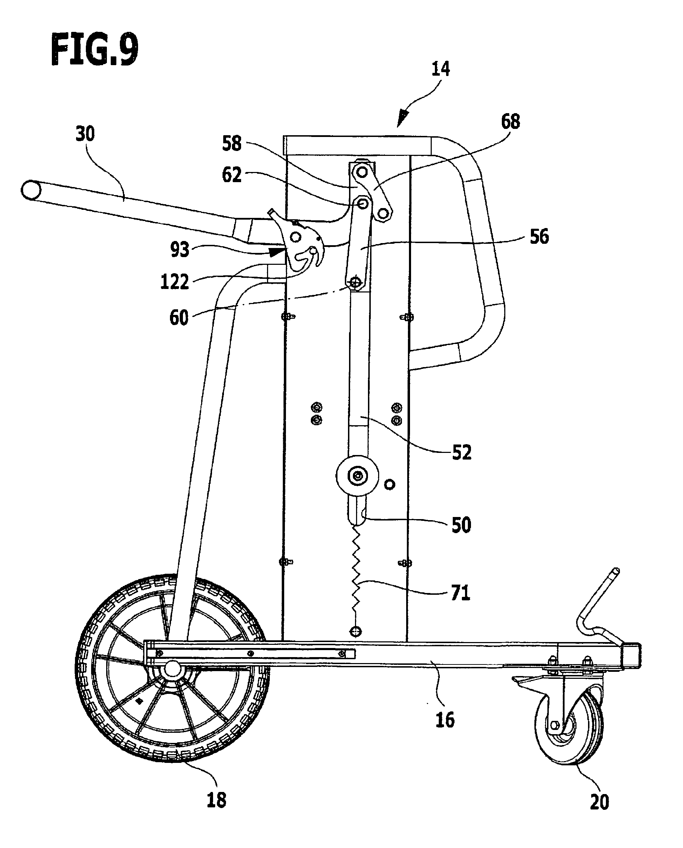

Soll der Schmutzsammelbehälter 83 abgesenkt werden, so muss der Schubbügel 32 in seine im Wesentlichen vertikal ausgerichtete Wartungsstellung verschwenkt werden. Hierzu ist es in einem ersten Schritt erforderlich, die beiden Rasthaken 93, 94 in ihre Freigabestellung zu verschwenken. Der Benutzer kann hierzu die Rasthaken 93, 94 an ihrem Betätigungsabschnitt 100 ergreifen und so weit um den jeweiligen Schwenkbolzen 102 verschwenken, dass statt des äußeren Schenkelabschnitts 120 der innere Schenkelabschnitt 116 am Mitnehmer 114 zur Anlage gelangt. Dies hat zur Folge, dass der hakenförmige Endabschnitt 97 den Rastbolzen 122 freigibt, der dann an der Innenseite des bogenförmigen Endabschnitts 98 zur Anlage gelangt. Dies wird insbesondere aus Figur 9 deutlich.

Der Schubbügel 32 kann dann um die Schwenkachse 70 in die Wartungsstellung nach oben verschwenkt werden, so dass der Schmutzsammelbehälter 82 auf die Bodenfläche abgesenkt wird und anschließend entleert werden kann.

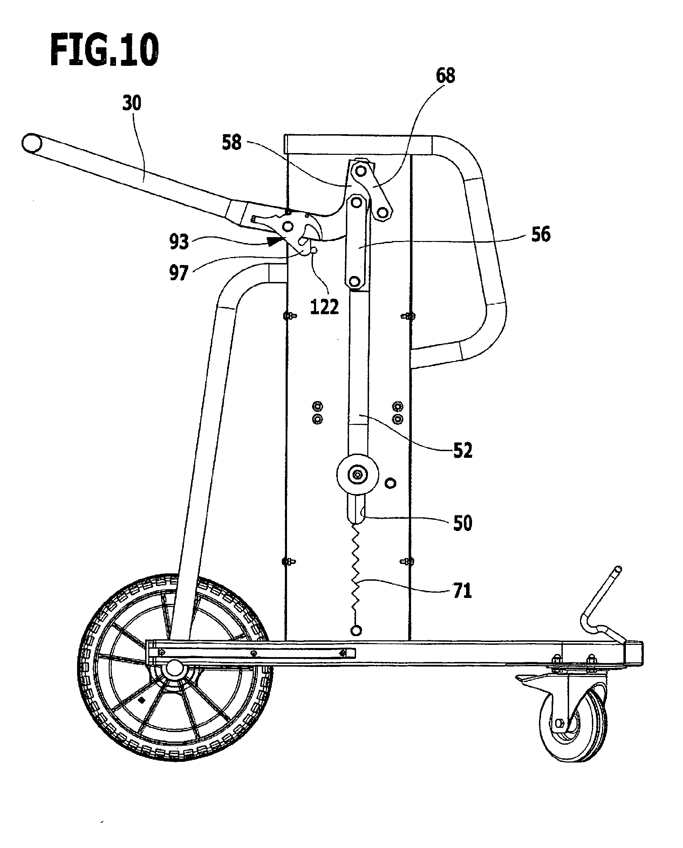

Soll der entleerte Schmutzsammelbehälter 82 wieder angehoben werden, so kann der Benutzer den Schubbügel 32 ausgehend von seiner Wartungsstellung in seine Betriebsstellung nach unten verschwenken. Hierbei treffen die ebenen Gleitflächen 99 der Rasthaken 93, 94 kurz vor Erreichen der Betriebsstellung des Schubbügels 32 auf die ortsfesten Rastbolzen 122. Dies wird aus Figur 10 deutlich. Die Rasthaken 93, 94 werden dadurch entgegen der Federkraft der Spreizfeder 108 so weit um den Schwenkbolzen 102 verschwenkt, dass der hakenförmige Endabschnitt 97 anschließend den Rastbolzen 122 umgreifen kann, d. h. der Rastbolzen 122 wird von der L-förmigen Ausnehmung 96 des jeweiligen Rasthakens 93 bzw. 94 aufgenommen. Bei Erreichen der Betriebsstellung wird dadurch der Schubbügel 32 mittels der Rasthaken 93, 94 und der zugeordneten Rastbolzen 122 zuverlässig arretiert.

Zum Lösen der Arretierung des Schubbügels 32 in dessen Betriebsstellung muss also der Benutzer bewusst beide Rasthaken 93 und 94 manuell in ihre Freigabestellung bewegen, in der die hakenförmigen Endabschnitte 97 den jeweiligen Rastbolzen 122 freigeben. Erst dann kann der Schubbügel 32 in seine Wartungsstellung verschwenkt werden. Die Gefahr, dass der Schubbügel 32 unbeabsichtigt in seine Wartungsstellung verschwenkt und dadurch der Schmutzsammelbehälter 82 von der Einlasskammer 74 getrennt wird, kann dadurch gering gehalten werden.

Das Arretieren des Schubbügels 32 beim Verschwenken von der Wartungsstellung in die Betriebsstellung erfordert dagegen vom Benutzer keine manuelle Bedienung der Rasthaken 93, 94. Diese werden vielmehr beim Übergang des Schubbügels 32 von der Wartungsstellung in die Betriebsstellung selbsttätig in ihre Arretierungsstellung überführt, indem die ebene Gleitfläche 99 am Rastbolzen 122 entlang gleitet.

Der Schubbügel 32 hat zum einen die Funktion, den Schmutzsammelbehälter 82 über die Hebemechaniken 28 der beiden Stützsäulen 22, 23 anzuheben und abzusenken. Hierbei muss der Benutzer den Schubbügel 32 in der dargestellten Ausführungsform lediglich um etwa 90° um die Schwenkachse 70 verschwenken, wobei er den Schubbügel 32 in dessen Betriebsstellung in stehender Haltung bequem ergreifen kann. Der Benutzer muss beim Absenken des Schmutzsammelbehälters 32 somit seine Position seitlich neben der Saugreinigungsvorrichtung 10 nicht verändern. Dies erleichtert die Handhabung der Saugreinigungsvorrichtung 10. Darüber hinaus hat der Schubbügel 32 die Funktion, die komplette Saugreinigungsvorrichtung 10 entlang einer Bodenfläche zu verfahren. Auch hierzu kann der Benutzer den Schubbügel 32 im Bereich des Griffteiles 46 in bequemer Haltung ergreifen und eine Schub- oder Zugkraft auf den Schubbügel 32 ausüben.

## Patentansprüche

1. Saugreinigungsvorrichtung (10) mit einem entlang einer Bodenfläche verfahrbaren Gestell (14) und einem Sauggerät (12), das ein am Gestell (14) gehaltenes Geräteoberteil (72) aufweist sowie einen unterhalb des Geräteoberteiles (72) angeordneten Schmutzsammelbehälter (82), wobei das Gestell (14) zumindest eine Hubeinrichtung (28) und ein um eine horizontal Schwenkachse (70) verschwenkbares Betätigungselement aufweist zum Anheben und Absenken des Schmutzsammelbehälters (82), der in seiner angehobenen Stellung am Geräteoberteil (72) strömungsdicht anliegt und der in seiner abgesenkten Stellung einen Abstand zum Geräteoberteil (72) einnimmt und auf der Bodenfläche aufsitzt, wobei das Betätigungselement als Schubbügel (32) ausgestaltet ist, der in der angehobenen Stellung des Schmutzsammelbehälters (82) vom Benutzer zum Verfahren der Saugreinigungsvorrichtung (10) in stehender Haltung ergreifbar ist und der zum Absenken des Schmutzsammelbehälters (82) um maximal 135° um die Schwenkachse (70) nach oben verschwenkbar ist, und wobei der Schubbügel (32) in der angehobenen Stellung des Schmutzsammelbehälters (82) arretierbar ist und die Saugreinigungsvorrichtung (10) mindestens ein Arretierungselement (93, 94) aufweist, das zwischen einer Arretierungsstellung, in der der Schubbügel (32) arretiert ist, und einer Freigabestellung, in der der Schubbügel (32) verschwenkbar ist, hin und her bewegbar ist, **dadurch gekennzeichnet, dass** das mindestens eine Arretierungselement (93, 94) beim Anheben des Schmutzsammelbehälters (82) durch Verschwenken des Schubbügels (32) selbsttätig in seine Arretierungsstellung bewegbar ist.

2. Saugreinigungsvorrichtung nach Anspruch 1, **dadurch gekennzeichnet, dass** der Schubbügel (32) in der angehobenen Stellung des Schmutzsammelbehälters (82) maximal 30° zur Horizontalen geneigt ist.

3. Saugreinigungsvorrichtung nach Anspruch 1 oder 2, **dadurch gekennzeichnet, dass** der Schubbügel (32) in der abgesenkten Stellung des Schmutzsammelbehälters (82) maximal 30° zur Vertikalen geneigt ist.

4. Saugreinigungsvorrichtung nach einem der voranstehenden Ansprüche, **dadurch gekennzeichnet, dass** der Schmutzsammelbehälter (82) durch Verschwenken des Schubbügels (32) um maximal 90° anhebbar und absenkbar ist.

5. Saugreinigungsvorrichtung nach einem der voranstehenden Ansprüche, **dadurch gekennzeichnet, dass** das Gestell (14) zwei Stützsäulen (22, 23) aufweist, zwischen denen das Sauggerät (12) angeordnet ist und an denen jeweils ein mit dem Schubbügel gekoppeltes Tragteil (48) höhenverstellbar gehalten ist.

6. Saugreinigungsvorrichtung nach Anspruch 5, **dadurch gekennzeichnet, dass** die Tragteile (48) jeweils in einer Führung (50) einer Stützsäule (22, 23) verschiebbar gelagert sind.

7. Saugreinigungsvorrichtung nach Anspruch 5 oder 6, **dadurch gekennzeichnet, dass** die Tragteile (48) jeweils über einen Kniehebel (54) mit dem Schubbügel (32) gekoppelt sind.

8. Saugreinigungsvorrichtung nach Anspruch 7, **dadurch gekennzeichnet, dass** die Kniehebel (54) einen ersten, an der Stützsäule (22, 23) schwenkbar gelagerten Hebelarm (56) aufweisen, der über ein Gelenk (62) mit einem zweiten, gelenkig über eine Zugstange (52) mit einem Tragteil (48) gekoppelten Hebelarm (58) verbunden ist.

9. Saugreinigungsvorrichtung nach Anspruch 8, **dadurch gekennzeichnet, dass** der zweite Hebelarm (58) starr mit dem Schubbügel (32) verbunden ist.

10. Saugreinigungsvorrichtung nach Anspruch 8 oder 9, **dadurch gekennzeichnet, dass** der Schubbügel (32) C- oder U-förmig ausgestaltet ist mit zwei Endabschnitten (36, 38), die über einen ein Griffteil (46) ausbildenden Verbindungsabschnitt (44) miteinander verbunden sind und an die sich jeweils ein zweiter Hebelarm (58) eines Kniehebels (54) anschließt.

11. Saugreinigungsvorrichtung nach Anspruch 10, **dadurch gekennzeichnet, dass** die zweiten Hebelarme (58) jeweils schräg oder senkrecht zu einem Endabschnitt (36, 38) des Schubbügels (32) ausgerichtet sind.

12. Saugreinigungsvorrichtung nach Anspruch 9, **dadurch gekennzeichnet, dass** die zweiten Hebelarme (58) einstückig mit dem Schubbügel (32) verbunden sind.

13. Saugreinigungsvorrichtung nach einem der voranstehenden Ansprüche, **dadurch gekennzeichnet, dass** der Schubbügel (32) in der abgesenkten Stellung des Schmutzsammelbehälters (82) mit einer Rückhaltekraft beaufschlagbar ist.

14. Saugreinigungsvorrichtung nach einem der voranstehenden Ansprüche, **dadurch gekennzeichnet, dass** das mindestens eine Arretierungselement (93, 94) mit einem Federelement (108) zusammenwirkt, das das Arretierungselement (93,94) in Abhängigkeit von dessen Ausrichtung relativ zum Federelement (108) wahlweise in der Arretierungsstellung oder in der Freigabestellung hält.

15. Saugreinigungsvorrichtung nach einem der voranstehenden Ansprüche, **dadurch gekennzeichnet, dass** das mindestens eine Arretierungselement (93, 94) zum Absenken des Schmutzsammelbehälters (82) manuell in seine Freigabestellung bewegbar ist und beim Anheben des Schmutzsammelbehälters (82) selbsttätig in seine Arretierungsstellung übergeht.

16. Saugreinigungsvorrichtung nach einem der voranstehenden Ansprüche, **dadurch gekennzeichnet, dass** das mindestens eine Arretierungselement (93, 94) am Schubbügel (32) angeordnet ist.

17. Saugreinigungsvorrichtung nach Anspruch 16, **dadurch gekennzeichnet, dass** am Schubbügel (32) zwei bewegliche Arretierungselemente (93, 94) angeordnet sind, die jeweils mit einem starr am Gestell (14) festgelegten Arretierungsglied (122) zusammenwirken.

18. Saugreinigungsvorrichtung nach einem der voranstehenden Ansprüche, **dadurch gekennzeichnet, dass** das mindestens eine Arretierungselement als am Schubbügel (32) schwenkbar gelagerter Rasthaken (93, 94) ausgestaltet ist, der in der Arretierungsstellung einen am Gestell (14) angeordneten Rastbolzen (122) hintergreift.

19. Saugreinigungsvorrichtung nach Anspruch 18, **dadurch gekennzeichnet, dass** der Rasthaken (93, 94) beim Verschwenken des Schubbügels (32) in die der angehobenen Stellung des Schmutzsammelbehälters (82) entsprechende Lage am Rastbolzen (122) entlang gleitet und dabei in seine Arretierungsstellung übergeht.

## Claims

1. Vacuum cleaning appliance (10) with a stand (14) which is movable along a floor surface, and a suction device (12) having a device upper part (72) mounted on the stand (14) and a dirt collection container (82) situated beneath the device upper part (72), the stand (14) having at least one lifting device (28) and an actuating element which is pivotable about a horizontal pivot axis (70) for raising and lowering the dirt collection container (82), which in its raised position abuts against the device upper part (72) in a flow-tight manner, and which in its lowered position is situated at a distance from the device upper part (72) and rests on the floor surface, the actuating element being configured as a push bar (32) which, in the raised position of the dirt collection container (82), may be gripped by the user in a standing posture in order to move the vacuum cleaning appliance (10), and which is upwardly pivotable about the pivot axis (70) by at most 135° in order to lower the dirt collection container (82), and the push bar (32) being lockable in the raised position of the dirt collection container (82), and the vacuum cleaning appliance (10) having at least one locking element (93, 94) which is movable back and forth between a locked position, in which the push bar (32) is locked, and a released position in which the push bar (32) is pivotable, **characterized in that** when the dirt collection container (82) is raised, the at least one locking element (93, 94) is automatically movable into its locked position by pivoting the push bar (32).

2. Vacuum cleaning appliance according to claim 1, **characterized in that** in the raised position of the dirt collection container (82), the push bar (32) is inclined by at most 30° with respect to the horizontal.

3. Vacuum cleaning appliance according to claim 1 or 2, **characterized in that** in the lowered position of the dirt collection container (82), the push bar (32) is inclined by at most 30° with respect to the vertical.

4. Vacuum cleaning appliance according to one of the preceding claims, **characterized in that** the dirt collection container (82) is raisable and lowerable by pivoting the push bar (32) by at most 90°.

5. Vacuum cleaning appliance according to one of the preceding claims, **characterized in that** the stand (14) has two support columns (22, 23) between which the suction device (12) is situated, and on which in each case a load-bearing part (48) that is coupled to the push bar is mounted in a height-adjustable manner.

6. Vacuum cleaning appliance according to claim 5, **characterized in that** the load-bearing parts (48) in each case are displaceably mounted in a guide (50) of a support column (22, 23).

7. Vacuum cleaning appliance according to claim 5 or 6, **characterized in that** the load-bearing parts (48) are each coupled to the push bar (32) via a toggle lever (54).

8. Vacuum cleaning appliance according to claim 7, **characterized in that** the toggle levers (54) have a first lever arm (56) which is pivotably mounted on the support column (22, 23) and which by means of an articulated joint (62) is connected to a second lever arm (58) that is articulatedly coupled to a load-bearing part (48) via a connecting rod (52).

9. Vacuum cleaning appliance according to claim 8, **characterized in that** the second lever arm (58) is fixedly connected to the push bar (32).

10. Vacuum cleaning appliance according to claim 8 or 9, **characterized in that** the push bar (32) is C- or U-shaped and has two end portions (36, 38) that are connected to one another via a connecting portion (44) which forms a handle part (46), a second lever arm (58) of a toggle lever (54) in each case adjoining the end portions.

11. Vacuum cleaning appliance according to claim 10, **characterized in that** each of the second lever arms (58) is oriented obliquely or perpendicularly with respect to an end portion (36, 38) of the push bar (32).

12. Vacuum cleaning appliance according to claim 9, **characterized in that** the second lever arms (58) are joined to the push bar (32) in one piece.

13. Vacuum cleaning appliance according to one of the preceding claims, **characterized in that** the push bar (32) may be acted on by a retention force in the lowered position of the dirt collection container (82).

14. Vacuum cleaning appliance according to one of the preceding claims, **characterized in that** the at least one locking element (93, 94) interacts with a spring element (108) which selectively holds the locking element (93, 94) in the locked position or in the released position, depending on the orientation of the locking element relative to the spring element (108).

15. Vacuum cleaning appliance according to one of the preceding claims, **characterized in that** the at least one locking element (93, 94) is manually movable into its released position in order to lower the dirt collection container (82), and automatically goes into its locked position when the dirt collection container (82) is raised.

16. Vacuum cleaning appliance according to one of the preceding claims, **characterized in that** the at least one locking element (93, 94) is situated on the push bar (32).

17. Vacuum cleaning appliance according to claim 16, **characterized in that** two movable locking elements (93, 94) are situated on the push bar (32), each interacting with an arresting member (122) which is fixedly secured to the stand (14).

18. Vacuum cleaning appliance according to one of the preceding claims, **characterized in that** the at least one locking element is configured as a detent hook (93, 94) which is pivotably mounted on the push bar (32), and which in the locked position engages behind a detent pin (122) situated on the stand (14).

19. Vacuum cleaning appliance according to claim 18, **characterized in that** when the push bar (32) is pivoted into the position corresponding to the raised position of the dirt collection container (82), the detent hook (93, 94) slides along the detent pin (122) and goes into its locked position.

## Revendications

1. Dispositif de nettoyage par aspiration (10) pourvu d'un châssis (14) mobile le long de la surface d'un sol et d'un aspirateur (12), lequel comporte une partie supérieure (72) retenue sur le châssis (14), ainsi qu'un récipient collecteur de saletés (82) disposé en dessous de la partie supérieure (72) de l'aspirateur, le châssis (14) comportant au moins un dispositif de levage (28) et un élément d'actionnement pivotant autour d'un axe de pivotement horizontal (70), pour lever et abaisser le récipient collecteur de saletés (82) lequel, dans sa position levée, est en contact hermétique avec la partie supérieure (72) de l'aspirateur et, dans sa position abaissée, est situé à une certaine distance de la partie supérieure (72) de l'aspirateur et repose sur la surface du sol, l'élément d'actionnement étant réalisé sous la forme d'une poignée (32), laquelle, dans la position levée du récipient collecteur de saletés (82), peut être saisie par l'utilisateur pour le déplacement du dispositif de nettoyage par aspiration (10) dans la position verticale et peut pivoter vers le haut sur 135° maximum autour de l'axe de pivotement (70) pour abaisser le récipient collecteur de saletés (82), et la poignée (32), dans la position levée du récipient collecteur de saletés (82), pouvant être bloquée et le dispositif de nettoyage par aspiration (10) comprenant au moins un élément de blocage (93, 94), lequel est animé d'un mouvement de va-et-vient entre une position de blocage, dans laquelle la poignée (32) est bloquée, et une position de libération, dans laquelle la poignée (32) peut pivoter, **caractérisé en ce que** le ou les éléments de blocage (93, 94), lorsque le récipient collecteur de saletés (82) est levé, peuvent se déplacer automatiquement dans leur position de blocage du fait d'un pivotement de la poignée (32).

2. Dispositif de nettoyage par aspiration selon la revendication 1, **caractérisé en ce que** la poignée (32), dans la position levée du récipient collecteur de saletés (82), est inclinée au maximum de 30° par rapport à l'horizontale.

3. Dispositif de nettoyage par aspiration selon la revendication 1 ou 2, **caractérisé en ce que** la poignée (32), dans la position abaissée du récipient collecteur de saletés (82), peut être inclinée de maximum 30° par rapport à la verticale.

4. Dispositif de nettoyage par aspiration selon l'une quelconque des revendications précédentes, **caractérisé en ce que** le récipient collecteur de saletés (82) peut être levé et abaissé du fait du pivotement de la poignée (32) de maximum 90°.

5. Dispositif de nettoyage par aspiration selon l'une quelconque des revendications précédentes, **caractérisé en ce que** le châssis (14) comprend deux colonnes d'appui (22, 23) entre lesquelles l'aspirateur (12) est disposé et sur lesquelles respectivement une partie support (48) accouplée à la poignée est retenue réglable en hauteur.

6. Dispositif de nettoyage par aspiration selon la revendication 5, **caractérisé en ce que** les parties support (48) sont montées mobiles respectivement dans un guidage (50) d'une colonne d'appui (22, 23).

7. Dispositif de nettoyage par aspiration selon la revendication 5 ou 6, **caractérisé en ce que** les parties support (48) sont accouplées à la poignée (32) respectivement au moyen d'une genouillère (54).

8. Dispositif de nettoyage par aspiration selon la revendication 7, **caractérisé en ce que** les genouillères (54) présentent un premier bras de levier (56) monté pivotant sur la colonne d'appui (22, 23) et relié, au moyen d'une articulation (62), à un second bras de levier (58) accouplé de manière articulée à une partie support (48) au moyen d'une barre de traction (52).

9. Dispositif de nettoyage par aspiration selon la revendication 8, **caractérisé en ce que** le second bras de levier (58) est relié rigidement à la poignée (32).

10. Dispositif de nettoyage par aspiration selon la revendication 8 ou 9, **caractérisé en ce que** la poignée (32) est réalisée en forme de C ou de U et est pourvue de deux sections d'extrémité (36, 38) reliées l'une à l'autre au moyen d'une section de liaison (44) formant une partie de préhension (46) et auxquelles est raccordé respectivement un second bras de levier (58) d'une genouillère (54).

11. Dispositif de nettoyage par aspiration selon la revendication 10, **caractérisé en ce que** les seconds bras de levier (58) sont orientés respectivement de manière inclinée ou perpendiculaire par rapport à une section d'extrémité (36, 38) de la poignée (32).

12. Dispositif de nettoyage par aspiration selon la revendication 9, **caractérisé en ce que** les seconds bras de levier (58) sont reliés d'une seule pièce à la poignée (32).

13. Dispositif de nettoyage par aspiration selon l'une quelconque des revendications précédentes, **caractérisé en ce que** la poignée (32), dans la position abaissée du récipient collecteur de saletés (82), peut être exposée à une force de retenue.

14. Dispositif de nettoyage par aspiration selon l'une quelconque des revendications précédentes, **caractérisé en ce que** le ou les éléments de blocage (93, 94) coopèrent avec un élément ressort (108), lequel retient l'élément de blocage (93, 94), en fonction de son orientation par rapport à l'élément ressort (108), sélectivement dans la position de blocage ou dans la position de libération.

15. Dispositif de nettoyage par aspiration selon l'une quelconque des revendications précédentes, **caractérisé en ce que** le ou les éléments de blocage (93, 94), pour abaisser le récipient collecteur de saletés (82), peuvent être déplacés manuellement dans leur position de libération, et, lorsque le récipient collecteur de saletés (82) est levé, passent automatiquement dans leur position de blocage.

16. Dispositif de nettoyage par aspiration selon l'une quelconque des revendications précédentes, **caractérisé en ce que** le ou les éléments de blocage (93, 94) sont disposés sur la poignée (32).

17. Dispositif de nettoyage par aspiration selon la revendication 16, **caractérisé en ce que** deux éléments de blocage (93, 94) mobiles, lesquels coopèrent respectivement avec un organe de blocage (122) fixé rigidement au châssis (14), sont disposés sur la poignée (32).

18. Dispositif de nettoyage par aspiration selon l'une quelconque des revendications précédentes, **caractérisé en ce que** le ou les éléments de blocage sont réalisés sous la forme d'un crochet d'arrêt (93, 94) monté pivotant sur la poignée (32) et venant se bloquer, dans la position de blocage, derrière un boulon d'arrêt (122) disposé sur le châssis (14).

19. Dispositif de nettoyage par aspiration selon la revendication 18, **caractérisé en ce que** le crochet d'arrêt (93, 94), lors du pivotement de la poignée (32) dans la position correspondant à la position levée du récipient collecteur de saletés (82), glisse le long du boulon d'arrêt (122) et, ce faisant, dans sa position de blocage.
